# EUROPÄISCHE PATENTANMELDUNG

(11) **EP 3 236 125 A1**
(43) Veröffentlichungstag der Anmeldung: **25.10.2017**
(21) Anmeldenummer: 17166422.0
(22) Anmeldetag: 13.04.2017
(51) Int. Cl.: F16L 23/14, F24F 13/02

(54) **FLANSCHPROFIL**

(30) Priorität: 14.04.2016 DE 202016101970 U
(71) Anmelder: Gebhardt-Stahl GmbH, 59457 Werl (DE)
(72) Erfinder: Schulte, Peter, DE - 59846 Sundern (DE)
(74) Vertreter: Meinke, Jochen

(57) **Zusammenfassung**

Ein Flanschprofil aus Blech zum Verbinden von Luftkanalelementen (1) mit einer auf das Ende (2a) eines Luftkanalbleches (2) des Luftkanalelementes (1) aufschiebbaren, von Profilschenkeln (6,7) gebildeten ersten Kammer (8) und einer winklig zu dieser angeordneten zweiten Kammer (5) zur Aufnahme von Eckwinkeln (4), wobei die beiden Kammern (8,5) durch einen von außen offenen, in das Innere gefalzten Doppelsteg (9) voneinander getrennt sind, soll so weiterentwickelt werden, dass die Abdichtung in Montageposition noch weiter erhöht wird.

Dies wird dadurch erreicht, dass zwischen den beiden Stegen (9a,9b) des Doppelsteges (9) ein Dichtmittel (10) angeordnet ist.

## Beschreibung

Die Erfindung betrifft ein Flanschprofil aus Blech zum Verbinden von Luftkanalelementen mit einer auf das Ende eines Luftkanalbleches des Luftkanalelementes aufschiebbaren, von Profilschenkeln gebildeten ersten Kammer und einer winklig zu dieser angeordneten zweiten Kammer zur Aufnahme von Eckwinkeln, wobei die beiden Kammern durch einen von außen offenen, in das Innere gefalzten Doppelsteg voneinander getrennt sind.

Ein vorzugsweise kaltgewalztes Flanschprofil dieser Art ist z.B. aus DE 20 2007 007 165 U1 bekannt. Bei diesem Profil ist zwischen der ersten und zweiten Kammer zur luftdichten Abtrennung vorgesehen, dass das Außenblech unter Ausbildung eines Dopelsteges übereinander gefalzt ist, wobei zusätzlich das Innenblech über den Doppelsteg gefalzt ist und die vier Schichten des Falzes miteinander verpresst sind und bevorzugt zusätzlich miteinander verclincht sind. Dadurch ist eine luftdichte Abtrennung zwischen den beiden Kammern zuverlässig gewährleistet.

Aus DE 10 2015 101 995 A1 ist ein Flanschprofil dieser Art bekannt, bei dem der in der Gebrauchslage im Luftkanalinneren positionierte Profilschenkel mit zwei, einen Abstand zueinander aufweisenden, in das Innere der ersten Kammer ragenden parallelen Sicken ausgerüstet ist, wobei der durch die Sicken gebildete Kanal mit einer Dichtwulst aus Kunststoff versehen ist, wobei die Dichtwulst tiefer in die erste Kammer ragt als die Sicken. Durch diese Ausgestaltung der Doppelsicke mit dazwischen angeordneter Dichtwulst ist gewährleistet, dass im Bereich des Einführens des Luftkanalelementes eine hohe Dichtigkeit besteht.

Aufgabe der Erfindung ist es, ein derartiges Flanschprofil so weiterzuentwickeln, dass die Abdichtung in Montageposition noch weiter erhöht wird.

Diese Aufgabe wird bei einem Flanschprofil der eingangs bezeichneten Art erfindungsgemäß dadurch gelöst, dass zwischen den beiden Stegen des Doppelsteges ein Dichtmittel angeordnet ist.

Es hat sich herausgestellt, dass Luft aus dem Kanalinneren auch im Bereich des Doppelsteges entlang desselben zu den Profilenden und damit zu den Eckbereichen, in denen die Eckwinkel angeordnet sind, gelangen und dort austreten kann. Um dies zu vermeiden, ist deshalb erfindungsgemäß vorgesehen, dass zwischen den beiden Doppelstegen ein Dichtmittel angeordnet ist, so dass auch in diesen Bereichen eine zuverlässige Abdichtung gewährleistet ist.

Dabei ist bevorzugt vorgesehen, dass das Dichtmittel von außen zwischen die beiden Stege des Doppelsteges eingebracht ist. Das Flanschprofil kann dann zunächst gewalzt werden und das Dichtmittel anschließend in das fertige Profil eingebracht werden.

Das Dichtmittel besteht bevorzugt aus einem geeigneten Kunststoffmaterial, insbesondere aus einem Butyl. Das Dichtmittel sollte dabei ausreichend fließfähig sein, um ein Einbringen in den Spalt zwischen den beiden Stegen durch Kapillarwirkung zu ermöglichen.

Ferner ist in an sich bekannter weiterer Ausgestaltung vorgesehen, dass in der ersten Kammer angrenzend an den Doppelsteg ein weiteres Dichtmittel angeordnet ist, das sicherstellt, dass eine Abdichtung im Bereich der Endkanten des jeweiligen Luftkanalelementes besteht. Die Ausgestaltung kann z.B. so sein, wie in DE 10 2015 101 995 A1 beschrieben.

Die Erfindung ist nachstehend anhand der Zeichnung beispielhaft näher erläutert. Diese zeigt in
- Fig. 1: in perspektivischer Darstellung ein mit erfindungsgemäßen Flanschprofilen bestücktes einbaufertiges Luftkanalelement,
- Fig. 2: einen Schnitt durch ein erfindungsgemäßes Flanschprofil nach einer ersten Ausgestaltung,
- Fig. 3: einen Schnitt durch zwei in Einbaulage benachbart angeordnete Flanschprofile nach Fig. 2,
- Fig. 4: einen Schnitt durch ein erfindungsgemäßes Flanschprofil nach einer zweiten Ausgestaltung und in
- Fig. 5: einen Schnitt durch zwei in Einbaulage benachbart angeordnete Flanschprofile nach Fig. 4.

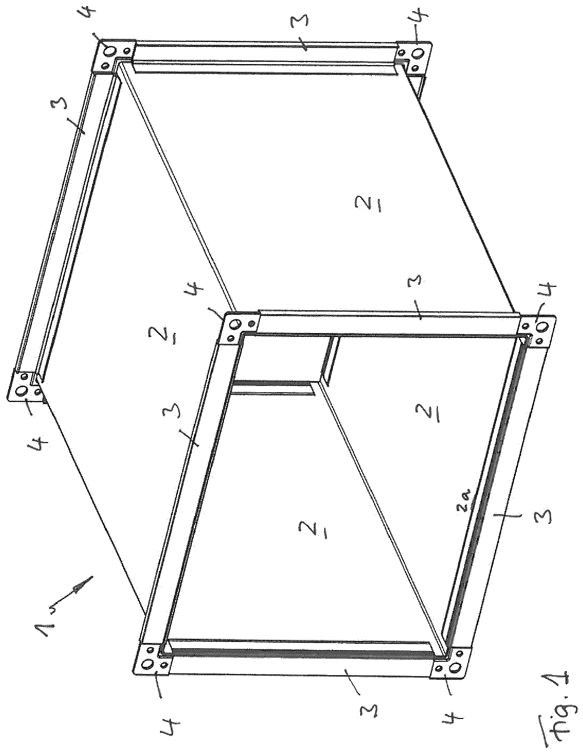

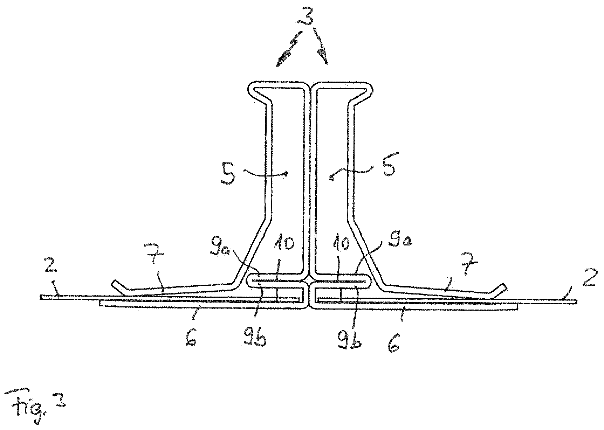

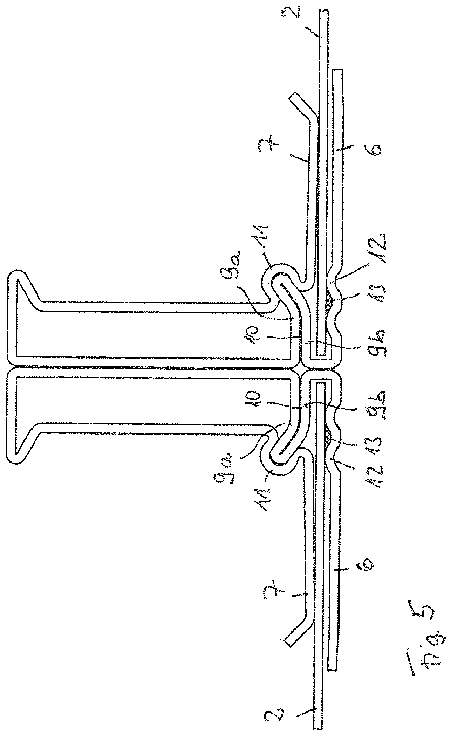

In Fig. 1 ist ein Luftkanalelement 1 dargestellt, welches aus einem Rohr mit geradflächigen Wänden und rechteckigem Querschnitt gebildet ist. Dabei ist jede Wand des Rohres von einem einzelnen Luftkanalblech 2 gebildet, wobei alle Luftkanalbleche 2 in der Regel einstückig und umlaufend dicht miteinander verbunden sind. Auf jede der Endkanten 2a des jeweiligen Luftkanalbleches 2 ist jeweils ein nachfolgend näher beschriebenes, erfindungsgemäßes Flanschprofil 3 aufgeschoben, so dass sich die Flanschteile der Flanschprofile 3 über das Luftkanalelement 1 hinaus nach außen erstrecken. In den Eckrandbereichen sind Eckwinkel 4 in zweite Kammern 5 der Flanschprofile 3 so eingeschoben, dass eine im Wesentlichen gleichförmige Flanschfläche gebildet ist, die an der Flanschfläche eines benachbarten Luftkanalelementes 1 gleicher Bauart befestigt wird (Fig. 3 und 5). Dabei wird in bekannter Weise zwischen zwei benachbarten Flanschprofilen 3 eine Dichtung angeordnet, die in den Fig. 3 und 5 nicht dargestellt ist.

Das jeweilige erfindungsgemäße Flanschprofil 3 ist von einem kaltgewalzten Blech gebildet. Dabei weist das Flanschprofil 3 eine von Profilschenkeln 6, 7 gebildete, einseitig offene erste Kammer 8 auf, die in der Gebrauchslage über die Endkante 2a eines Luftkanalbleches 2 geschoben wird, um so den in Fig. 1 dargestellten umlaufenden Flanschrahmen zu bilden. Ferner weist das Flanschprofil 3 winklig zur ersten Kammer 8 die zweite Kammer 5 zur Aufnahme von Eckwinkeln 4 auf. Die beiden Kammern 8, 5 sind durch einen von außen offenen, in das Innere gefalzten Doppelsteg 9 voneinander getrennt, dessen beide Stege mit 9a und 9b bezeichnet sind. Das innere Ende des Doppelsteges 9 liegt vorzugsweise an der Innenseite des Profilschenkels 7 an und kann mit diesem vorzugsweise dicht verbunden sein.

Wesentlich ist nun, dass zwischen den beiden Stegen 9a, 9b des Doppelsteges 9 ein Dichtmittel 10 angeordnet ist. Dieses Dichtmittel 10 besteht bevorzugt aus fließfähigem Butyl und wird vorzugsweise durch Kapillarwirkung nach der Herstellung des Flanschprofils 3 in den Spalt zwischen den beiden Stegen 9a, 9b eingebracht. Durch dieses Dichtmittel 10 wird zuverlässig verhindert, dass Luft aus dem Luftkanalinneren entlang des Spaltes zwischen den beiden Stegen 9a und 9b des Doppelsteges 9 in die flanschlosen Eckbereiche gelangen und dort austreten kann.

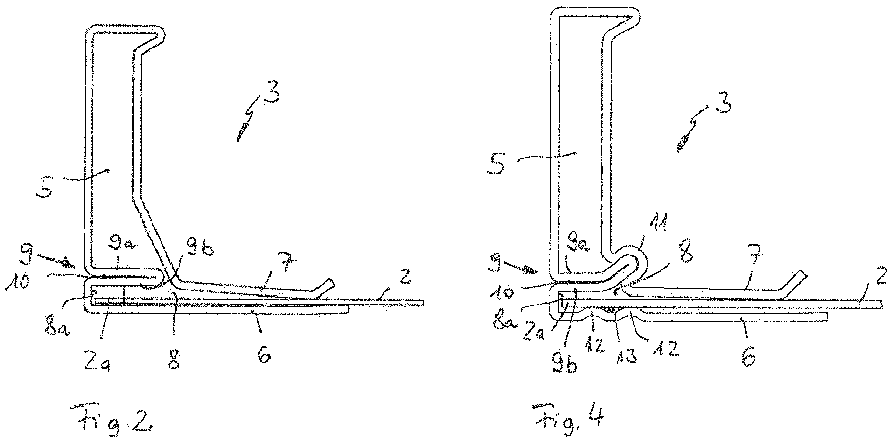

Vorzugsweise ist in der ersten Kammer 8 angrenzend an den Doppelsteg 9 im Bereich der Stirnkante 8a ein weiteres Dichtmittel angeordnet, welches bei der Ausführungsform nach Fig. 2 und 3 nicht dargestellt ist.

In den Fig. 4 und 5 ist ein abgewandeltes Ausführungsbeispiel des Flanschprofiles 3 dargestellt, wobei dieselben Bezugszeichen wie in den anderen Figuren verwandt sind, lediglich die Unterschiede sind mit zusätzlichen Bezugszeichen gekennzeichnet.

Das Flanschprofil 3 nach Fig. 4 und 5 weist zunächst eine etwas andere Gestaltung des Doppelsteges 9 auf. Dieser ist am inneren Ende im Sinn der Fig. 4 und 5 nach oben abgewinkelt und greift in eine Wulst 11 im ersten Profilschenkel 7 ein und ist dort durch Kröpfen oder dgl. fest verbunden, was nicht näher dargestellt ist. Dadurch ist eine dichte Abtrennung zwischen den beiden Kammern 8, 5 besonders zuverlässig gewährleistet.

Ferner weist der in der Gebrauchslage im Luftkanalinneren angeordnete Profilschenkel 6 im Bereich des Doppelsteges 9 zwei parallel zueinander angeordnete Sicken 12 auf, die in das Innere der ersten Kammer 8 ragen. Zwischen den beiden parallelen Sicken 12 ist im Inneren der ersten Kammer 8 eine Dichtwulst 13 eingebracht, die aus Kunststoff, vorzugsweise aus Butyl, besteht. Die Dichtwust 13 ragt dabei tiefer in die einseitig offene erste Kammer 8 hinein als die beiden Sicken 12, wie sich aus Fig. 4 und 5 ergibt.

Diese an sich aus DE 10 2015 101 995 A1 bekannte Ausbildung der Sicken 12 mit Dichtwulst 13 gewährleistet, dass, wenn das Flanschprofil 3 bzw. dessen beide, die offene erste Kammer 8 bildenden Schenkel 6 und 7 auf eine Endkante 2a eines Luftkanalbleches 2 aufgeschoben wird bzw. werden, die Endkante 2a des Luftkanalbleiches 2 zunächst auf die erste der beiden Sicken 12, dann auf die Dichtwulst 13 und schließlich über die zweite Sicke 12 bis an die Stirnkante 8a der ersten Kammer 8 trifft. Durch die Dichtwulst 13 wird zusätzlich zu den Sicken 12 verhindert, dass aus dem Inneren des Luftkanalelementes 1 Luft nach außen austreten kann.

Auch beim Ausführungsbeispiel nach Fig. 4 und 5 ist erfindungsgemäß vorgesehen, dass zwischen den Stegen 9a, 9b des Doppelsteges 9 ein Dichtmittel 10 angeordnet ist, das dieselbe Funktion erfüllt wie beim Ausführungsbeispiel nach Fig. 2 und 3.

Natürlich ist die Erfindung noch in vielfältiger Hinsicht abzuändern, ohne den Grundgedanken zu verlassen. So kann das Flanschprofil 3 auch eine andere Gestaltung aufweisen, wesentlich ist, dass ein nach innen gerichteter Doppelsteg 9 vorhanden ist, der die beiden Kammern 8 und 5 voneinander trennt und zwischen dessen Stegen 9a und 9b ein Dichtmittel 10 angeordnet ist.

### Bezugszeichenliste:

- 1: Luftkanalelement
- 2: Luftkanalblech
- 2a: Endkante
- 3: Flanschprofil
- 4: Eckwinkel
- 5: zweite Kammer
- 6: Profilschenkel
- 7: Profilschenkel
- 8: erste Kammer
- 8a: Stirnkante
- 9: Doppelsteg
- 9a: Steg
- 9b: Steg
- 10: Dichtmittel
- 11: Wulst
- 12: Sicken
- 13: Dichtwulst

## Patentansprüche

1. Flanschprofil aus Blech zum Verbinden von Luftkanalelementen (1) mit einer auf das Ende (2a) eines Luftkanalbleches (2) des Luftkanalelementes (1) aufschiebbaren, von Profilschenkeln (6,7) gebildeten ersten Kammer (8) und einer winklig zu dieser angeordneten zweiten Kammer (5) zur Aufnahme von Eckwinkeln (4), wobei die beiden Kammern (8,5) durch einen von außen offenen, in das Innere gefalzten Doppelsteg (9) voneinander getrennt sind,
**dadurch gekennzeichnet,**
**dass** zwischen den beiden Stegen (9a,9b) des Doppelsteges (9) ein Dichtmittel (10) angeordnet ist.

2. Flanschprofil nach Anspruch 1,
**dadurch gekennzeichnet,**
**dass** das Dichtmittel (10) von außen zwischen die beiden Stege (9a,9b) des Doppelsteges (9) eingebracht ist.

3. Flanschprofil nach Anspruch 1 oder 2,
**dadurch gekennzeichnet,**
**dass** das Dichtmittel (10) aus Kunststoff besteht.

4. Flanschprofil nach Anspruch 3,
dass das Dichtmittel (10) aus Butyl besteht.

5. Flanschprofil nach einem oder mehreren der Ansprüche 1 bis 4,
**dadurch gekennzeichnet,**
**dass** in der ersten Kammer (8) angrenzend an den Doppelsteg (9) ein weiteres Dichtmittel (13) angeordnet ist.
